Europäisches Patentamt

European Patent Office

Office européen des brevets

(11) Veröffentlichungsnummer: **0 271 113**
**A2**

(12) **EUROPÄISCHE PATENTANMELDUNG**

(21) Anmeldenummer: **87118400.8**

(22) Anmeldetag: **11.12.87**

(51) Int. Cl.⁴: **F16K 39/02**

(30) Priorität: **11.12.86 DE 3642303**

(43) Veröffentlichungstag der Anmeldung:
**15.06.88 Patentblatt 88/24**

(84) Benannte Vertragsstaaten:
**AT BE CH DE ES FR GB GR IT LI LU NL SE**

(71) Anmelder: **Mayer, Dieter**
**Sternstrasse 139**
**D-6700 Ludwigshafen/Rhein(DE)**

Anmelder: **Mayer, Walter**
**Schulstrasse 1a**
**D-6701 Fussgönheim(DE)**

(72) Erfinder: **Mayer, Dieter**
**Sternstrasse 139**
**D-6700 Ludwigshafen/Rhein(DE)**
Erfinder: **Mayer, Walter**
**Schulstrasse 1a**
**D-6701 Fussgönheim(DE)**

(74) Vertreter: **Patentanwälte TER MEER - MÜLLER**
**- STEINMEISTER**
**Artur-Ladebeck-Strasse 51**
**D-4800 Bielefeld 1(DE)**

(54) **Ventil mit druckentlastetem Ventilglied.**

㉟ Bei einem Ventil (10) mit einem axial beweglichen Ventilglied (18) und einer Druckentlastungskammer (42) zur Druckentlastung des Ventilglieds in der Schließstellung wird die Umfangswand der Druckausgleichskammer durch ein einstückiges, faltenbalgartiges Rohr (40) gebildet, das den hohen Innendruck in der Druckentlastungskammer 42 aufnimmt und sich den Öffnungs-und Schließbewegungen des Ventilglieds (18) anpaßt. Durch das einstückige, an seinen Enden mit dem Ventilglied (18) bzw. der Wand (26) des Ventilgehäuses verschweißte Rohr (40) wird eine lecksichere Abdichtung des druckentlasteten Ventils ermöglicht.

## VENTIL MIT DRUCKENTLASTETEM VENTILGLIED

Die Erfindung betrifft ein Ventil mit einem axial beweglichen Ventilglied, bei dem zwischen dem Ventilglied und der diesem in Öffnungsrichtung gegenüberliegenden Gehäusewand eine Druckentlastungskammer gebildet ist, die mit der entgegengesetzten Seite des Ventilglieds in Fluidverbindung steht.

Die für ein zuverlässiges Schließen eines derartigen Vertils erforderliche Schließkraft ist vom Querschnitt der Ventilöffnung und von dem beigeschlossenem Ventil maximal auftretenden Differenzdruck abhängig. Bei Vertilen mit einer Nennweite bis zu etwa DN 150, die bei Differenzdrücken bis zu 600 kPa eingesetzt werden, läßt sich die erforderliche Schließkraft mit Hilfe eines im Antrieb für die Ventilspindel untergebrachten Federpakets erzeugen. Bei größeren Nennweiten oder größeren Differenzdrücken ist es jedoch schwierig, das Federpaket so zu gestalten, daß einerseits eine ausreichende Schließkraft und andererseits ein ausreichender Federweg zur Verfügung steht. Beispielsweise ist bei einem Kekel-oder Tellerventil mit metallischer Abdichtung bei der Nennweite DN 250 und einem maximalen Differenzdruck von einem MPa eine Schließkraft von etwa 65 kN erforderlich. Bei einem Ventilhub von etwa 100mm wächst die zum Öffnen des Ventils benötigte Stellkraft auf etwa 110 kN an, so daß eine entsprechend großer und kostspieliger Antrieb eingesetzt werden muß.

Bei einem Ventil der eingangs genannten Art wird durch Druckentlastung des Ventilglieds eine Verringerung der benötigten Stellkräfte ermöglicht. Die auf der Niederdruckseite des Ventilglieds angeordnete Druckentlastungskammer steht beispielsweise über Bohrungen in dem Ventil glied mit der Hochdruckseite in Verbindung, so daß in der Schließstellung des Ventils der in Öffnungsrichtung wirkende Druck nahezu vollständig durch den in der Druckentlastungskammer herrschenden Druck ausgeglichen wird. Die Umfangswand der Druckentlastungskammer schließt einerseits druckdicht an das Ventilglied und andererseits druckdicht an die gegenüberliegende Gehäusewand an und muß daher zum Ausgleich des Ventilhubes in ihrer Länge variabel sein. Dabei muß die Umfangswand jedoch auch einem verhältnismäßig hohen Innendruck entsprechend dem maximalen Differenzdruck bei geschlossenem Ventil standhalten.

Bei herkömmlichen Ventilen mit druckentlastetem Ventilglied wird die Umfangswand der Druckentlastungskammer durch zwei teleskopartig ineinanderschiebbare Rohre gebildet. Die Abdichtung zwischen den beiden Rohren erfolgt mit Hilfe eines aufgeschraubten Dichtrings, beispielsweise eines PTFE-oder Graphitrings.

Ein Nachteil derartiger Ventilebesteht jedoch darin, daß eine völlig leckfreie Abdichtung des Spalts zwischen den beiden Rohren der Druckentlastungskammer nicht möglich ist. Bei Anwendungen, bei denen ein völlig leckagefreies Schließen des Ventils erforderlich ist, können daher bisher keine Ventile mit druckentlastetem Ventilglied eingesetzt werden. Bei Anwendungen, bei denen eine Leckage des Ventils bis zu einem gewissen Grad in Kauf genommen werden kann, sind häufige Wartungsarbeiten erforderlich, da die Leckage im Lauf des Betriebs mit zunehmendem Verschleiß des Dichtrings zunimmt.

Der Erfindung liegt daher die Aufgabe zugrunde, ein Ventil mit druckentlastetem Ventilglied zu schaffen, bei dem die Druckentlastungskammer hermetisch abgedichtet ist.

Diese Aufgabe wird erfindungsgemäß dadurch gelöst, daß die Umfangswand der Druckentlastungskammer ein einstückiges, faltenbalgartiges Rohr ist.

Derartige Rohre, die eine faltenbalgartig gestaltete Rohrwand aus Edelstahl aufweisen und daher in Längsrichtung zu einem gewissen Grad verformbar sind, werden im Rohrleitungsbau als sogenannte Kompensatoren zum Ausgleichen von thermischen Längenausdehnungen verwendet. In Ventilen sind diese Kompensatoren bisher nicht eingesetzt worden. Es hat sich jedoch gezeigt, daß die Kompensatoren bei entsprechender Einbaulänge einen ausreichenden Ventilhub ermöglichen und dennoch eine ausreichende Stabilität gegenüber relativ hohen Innendrücken aufweisen. Anders als beim Ausgleich von Wärmeausdehnungen ist der Kompensator bei den Stellbewegungen des Ventils einer verhältnismäßig hohen mechanischen Beanspruchung ausgesetzt. Dies führt jedoch nicht zu einer Materialermüdung, durch die die Haltbarkeit des Kompensators beeinträchtigt würde. Durch den Einsatz derartiger Kompensatoren zur Bildung der Druckentlastungskammer wird somit erfindungsgemäß ein wartungsfreies Ventil mit druckentlastetem Ventilglied geschaffen, das auch bei hohen Drücken und Temperaturen absolut lecksicher ist.

Es sind bereits Faltenbalgventile bekannt, bei denen die Durchführung der Ventilspindel durch die Wand des Ventilgehäuses mit Hilfe eines die Ventilspindel umgebenden Faltenbalges abgedichtet wird. Der Faltenbalg wird bei diesen bekannten Konstruktionen jedoch nur von außen mit Druck beaufschlagt und ist nicht für die Aufnahme relativ hoher Innendrücke ausgelegt.

Bevorzugt ist bei dem erfindungsgemäßen Ventil ein wei terer Faltenbalg oder Kompensator vorgesehen, der nach Art des oben erwähnten Faltenbalgventils die durch die Druckentlastungskammer verlaufende Ventilspindel abdichtet.

Die äußere Umfangswand der Druckentlastungskammer ist vorzugsweise mit verhältnismäßig geringem Abstand von einer zylindrischen Wand des Ventilgehäuses umgeben, die ein zu starkes Ausknicken des faltenbalgartigen Rohres verhindert. Wahlweise kann die Umfangswand der Druckentlastungskammer auch von ein oder mehreren eng anliegenden Ringen umgeben sein, die mit geringem Spiel an der Innenfläche der Gehäusewand entlanggleiten.

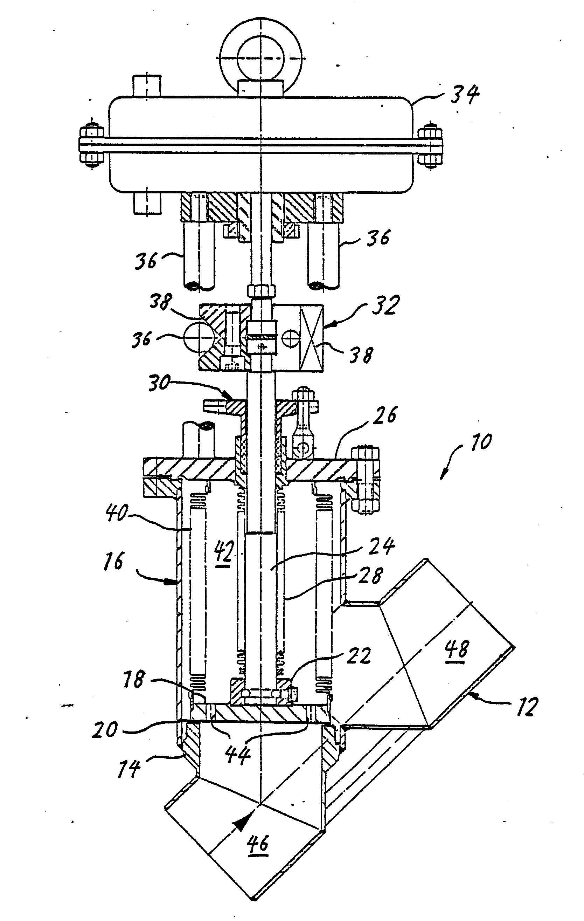

Im folgenden wird ein bevorzugtes Ausführungsbeispiel der Erfindung anhand der Zeichnung näher erläutert.

Die einzige Figur zeigt einen Längsschnitt durch ein erfindungsgemäßes Ventil.

Ein Schrägsitz-Ventil 10 weist einen in eine Rohrleitung 12 eingeschweißten Ventilsitz 14 und ein unter einem Winkel von 45° mit der Rohrleitung verschweißtes Gehäuse 16 auf, das einen axial gegen den Ventilsitz 14 andrückbaren Ventilteller 18 aufnimmt. Zwischen dem Ventilsitz 14 und dem Ventilteller 18 ist eine ringförmige Metalldichtung 20 eingefügt. Der Ventilteller 18 ist mit Hilfe eines Lagers 22 drehbar am freien Ende einer Ventilspindel 24 befestigt, die axial durch eine das Gehäuse 16 flanschförmig abschließende Wand 26 hindurchgeführt ist. Die Durchführung der Ventilspindel 24 durch die Wand 26 ist durch einen Faltenbalg 28 und aus Sicherheitsgründen zusätzlich durch eine Stopfbuchse 30 abgedichtet.

Die Ventilspindel 24 ist über eine Kupplung 32 mit einem pneumatischen Antriebszylinder 34 verbunden, der über zwei Führungsstangen 36 starr mit der Wand 26 des Gehäuses 16 verbunden ist. Die Kupplung 32 steht über zwei V-förmige Längsnuten 38 mit den Führungsstangen 36 in Eingriff und bildet zugleich eine Drehsicherung für die Ventilspindel 24.

Ein Edelstahlrohr 40 mit einer faltenbalgartig gestalteten Rohrwand ist innerhalb des Gehäuses 16 an einem Ende mit dem Ventilteller 18 und am anderen Ende mit der gegenüberliegenden Wand 26 des Gehäuses verschweißt. Das Edelstahlrohr 40 bildet die Umfangswand einer Druckentlastungskammer 42, die an einem Ende durch die Wand 26 und am anderen Ende durch den Ventilteller 18 abgeschlossen ist und über Bohrungen 44 des Ventiltellers mit der Einlaß-oder Hochdruckseite 46 des Ventils in Verbindung steht. Das Edelstahlrohr 40 ist aufgrund seiner faltenbalgartigen Konstruktion in Längsrichtung verformbar und kann sich somit der Hubbewegung des Ventiltellers 18 beim Öffnen und Schließen des Ventils anpassen.

Wenn sich das Ventil in der in der Zeichnung dargestellten Schließstellung befindet und auf der Einlaßseite 46 mit einem hohen Druck beaufschlagt wird, so gelangt das Druckfluid über die Bohrungen 44 in die Druckentlastungskammer 42. Der Ventilteller 18 wird daher von beiden Seiten mit dem gleichen Druck beaufschlagt, so daß durch das Druckfluid praktisch keine resultierende Kraft auf den Ventilteller ausgeübt wird. Der Antriebszylinder 34 braucht daher nur eine verhältnismäßig geringe Stellkraft aufzubringen, um den Ventilteller 18 mit der erforderlichen Schließkraft gegen den Ventilsitz 14 anzudrücken.

Das Edelstahlrohr 40 weist trotz seiner axialen Verformbarkeit eine hohe Stabilität gegenüber radialen Druckkräften auf und kann daher dem in der Druckentlastungskammer 42 herrschenden Innendruck standhalten. Die Druckentlastungskammer 42 ist durch das Edelstahlrohr 40 lecksicher gegenüber der Auslaßseite 48 des Ventils abgedichtet.

Durch den Faltenbalg 28, der sich an der Umfangsfläche der Ventilspindel 24 abstützt, wird die Durchführung der Ventilspindel durch die Wand 26 trotz des hohen Innendruckes in der Druckentlastungskammer 42 sicher abgedichtet. Bei einem Bruch des Faltenbalgs 28 wird die Durchführung durch die Stopfbuchse 30 abgedichtet, so daß auch in diesem Fall kein Druckfluid austreten kann.

Das erfindungsgemäße Ventil wird beispielsweise in der Wärmeträgertechnik eingesetzt, eignet sich jedoch aufgrund seiner hohen Lecksicherheit insbesondere auch für chemische und petrochemische Prozeßanwendungen mit flüchtigen, gefährlichen und umweltgefährdenden Medien.

**Ansprüche**

1. Sperrventil mit einer Nennweite von wenigstens DN 150 für Differenzdrücke von wenigstens 600 kPa, mit einem axialbeweglichen, entgegen dem auf der Hochdruckseite (46) des Ventils herrschenden Druck in der Schließstellung gehaltenen Ventilglied (18), bei dem zwischen dem Ventilglied und der diesem in Öffnungsrichtung gegenüberliegenden Gehäusewand (25) eine Druckentlasungskammer (42) gebildet ist, die mit der Hochdruckseite (46) des Ventils in Fluidverbindung steht, dadurch **gekennzeichnet**, daß die Umfangswand der Druckentlasungskammer (42) ein einstückiges, faltenbalgartiges Edelstahlrohr (40) ist.

2. Sperrventil nach Anspruch 1, dadurch **gekennzeichnet**, daß das Edelstahlrohr (40) von wenigstens einem Stützring umgeben ist, der mit geringem Spiel an der umgebenden Wand des Gehäuses (16) entlanggleitet.

3. Sperrventil nach Anspruch 1 oder 2, dadurch **gekennzeichnet**, daß eine durch die Druckentlastungskammer (42) und die dem Ventilglied gegenüberliegende Gehäusewand (26) verlaufende Ventilspindel (24) von einem druckdicht mit der Ventilspindel und der Gehäusewand (26) verbundenen Faltenbalg (28) umgeben ist.